# EUROPÄISCHE PATENTSCHRIFT

(11) **EP 0 677 316 B1**
(45) Veröffentlichungstag und Bekanntmachung des Hinweises auf die Patenterteilung: **28.01.1998**
(21) Anmeldenummer: 94117696.8
(22) Anmeldetag: 09.11.1994
(51) Int. Cl.: B01D 29/86, B01D 29/60, B01D 29/54, B01D 29/11

(54) **Filtervorrichtung**
Filtering device
Dispositif de filtration

(30) Priorität: 25.11.1993 DE 4340218
(43) Veröffentlichungstag der Anmeldung: 18.10.1995
(73) Patentinhaber: ATEC Automatisierungstechnik GmbH, D-89231 Neu-Ulm (DE)
(72) Erfinder: Enderle, Günther, Dipl.-Ing., D-89269 Vöhringen (DE)
(74) Vertreter: Fay, Hermann, Dipl.-Phys. Dr.

(56) Entgegenhaltungen:
- EP-A- 0 518 250
- DE-A- 4 005 737
- DE-B- 1 126 717
- US-A- 3 367 503
- US-A- 4 525 274

## Beschreibung

Die Erfindung bezieht sich auf eine Filtervorrichtung nach dem Oberbegriff des Anspruchs 1. Eine solche ist aus der DE-C-41 35 359 bekannt.

Bei der Filtration von mit Feststoffen beladenen Flüssigkeiten stellt sich das Problem, daß sich auf den Filtermedien sehr schnell Feststoffe abscheiden, die sich zu einem Filterkuchen aufbauen und die Filtermembran verstopfen und somit den Flüssigkeitsdurchsatz durch die Filtermembran rasch vermindern. Aus diesem Grunde ist man zur Querstromfiltertechnik übergegangen, bei der eine parallel zur Oberfläche der Filtermembran verlaufende Strömungskomponente in der zu filternden Trübe erzeugt wird, die ein vorzeitiges Abscheiden von Feststoffanteilen auf der Filtermembran verhindert.

Aus der DE-A-40 05 737 ist eine Filtervorrichtung mit Filterzylindern und einem Rührer bekannt. Die Rührelemente sind nicht auf einem zur Achse des Rotors konzentrischen Kreis angeordnet, sondern erstrecken sich radial von einer Rotorachse. Den Filterzylindern sind jeweils eine Querströmung hervorrufende Rührblätter zugeordnet, die sich nicht um die Behälterachse, sondern individuell um die einzelnen Filterzylinder bewegen.

Aus der EP-B-0 178 389 ist ein Druckfilterapparat bekannt, bei dem die Querströmung mit Hilfe eines zwischen zwei benachbarten Filterelementen umlaufenden Rotors hervorgerufen wird. Die Filterelemente bestehen dabei aus plattenförmigen Körpern. Das Aufspannen und Auswechseln der Filtermembranen ist bei einem solchen Filterapparat sehr umständlich, weil hierfür die relativ schweren Filterelemente aus dem Apparat entnommen werden müssen.

Aus der EP-A-0 370 118 ist eine Filtervorrichtung bekannt, die mehrere konzentrisch ineinandersitzende, doppelwandige, rotierende Filterkörper verwendet, wobei benachbarte Filterkörper in zueinander entgegengesetzten Drehrichtungen umlaufen, sodaß an allen Filterkörpern Querströmungen erzeugt werden. Diese Konstruktion ist relativ aufwendig, und es ist insbesondere auch der Wechsel der Filtermembranen an den Filterkörpern nicht einfach zu bewerkstelligen. Die Filterkörper verlangen speziell dimensionierte Filtermembranen entsprechend ihrer unterschiedlichen Größen, wobei in jeder Filtervorrichtung die betreffende Größe nur einmal vorkommt. Dieses macht die Lagerhaltung relativ teuer.

Da es im Betrieb immer wieder und rein zufällig vorkommen kann, daß die Filtermembranen verletzt werden, beispielsweise durch in der Trübe enthaltene Festkörper, die durch die Querströmung an den Filtermembranen entlang bewegt werden, leidet die Filtrationsqualität, d.h. es treten unerwünschte Filtratqualitäten durch die Filtermembran hindurch, die dann im Filtrat enthalten sind und das Arbeitsergebnis beeinträchtigen oder völlig unbrauchbar machen. Weitere Fehler können bei der Herstellung der Filtermembranen und beim Befestigen derselben an ihren Trägerelementen entstehen, und solche Fehler sind häufig erst im Betrieb feststellbar, sodaß es ggf. schon unmittelbar nach Inbetriebnahme der Filtervorrichtung notwendig werden kann, diese wieder stillzusetzen.

Den bekannten Filterpressen ist ferner gemeinsam, daß die Filtratkammern der Filterelemente innerhalb der Filtervorrichtung miteinander verbunden sind, sodaß sich, wenn im Filtrat unerwünschte Qualitäten enthalten sind, nicht feststellen läßt, welches der Filterelemente schadhaft geworden ist und eines Austauschs bedarf. Optisch lassen sich Beschädigungen an Filtermembranen nur sehr schwierig beurteilen, sodaß die Schadhaftigkeit eines einzigen Filterelements mitunter den Austausch der Filtermembranen an sämtlichen Filterelementen erforderlich macht. Dies ist nicht nur aufwendig, sondern bedingt auch längere Stillstandszeiten der gesamten Vorrichtung.

Der Erfindung liegt die Aufgabe zugrunde, eine Filtervorrichtung der eingangs genannten Art anzugeben, die in ihrem Aufbau einfach ist und mit der es möglich ist, auch bei Beschädigung einzelner Filterelemente noch befriedigende Arbeitsergebnisse zu erzielen.

Diese Aufgabe wird durch die im Anspruch 1 angegebene Erfindung gelöst. Vorteilhafte Ausgestaltungen der Erfindung sind Gegenstand der Unteransprüche.

Bei der erfindungsgemäßen Filtervorrichtung sind die stabförmigen Filterelemente lösbar in der einen Stirnwand eines vorzugsweise zylindrischen Behälters befestigt. Sie sind dort auf wenigstens einem Kreis angeordnet, und gegenüberliegend dieser Stirnwand ist in dem Behälter, der im übrigen mit einer Einrichtung zum Einleiten einer zu filternden Trübe unter Druck versehen ist, ein Rotor drehbar gelagert, der aus einer zu dem genannten Kreis konzentrischen Welle, einer sich radial davon erstreckenden Tragvorrichtung und aus einer Vielzahl von Rührelementen besteht, die mit ihrem einen Ende an der Tragvorrichtung befestigt sind und sich parallel zu den Filterelementen in radialem Abstand zu diesen erstrecken. Ist der Behälter zylindrisch, ist die vorbeschriebene Anordnung vorzugsweise konzentrisch zur Behälterachse. Der Rotor kann in der Stirnwand gelagert sein, die der die Filterlemente haltenden Stirnwand gegenübersteht, oder in derselben Stirnwand.

Ein wesentliches Merkmal der Erfindung ist, daß die Filterelemente durch die erstgenannte Behälterstirnwand hindurch entwässert sind und daß sich das Filtrat in jeder Filtratleitung unabhängig von den anderen Filtratleitungen prüfen läßt. In Kombination mit Absperrventilen und/oder Umschaltventilen ist es dann möglich, die Filterelemente individuell inaktiv zu machen, wenn sich herausstellen sollte, daß sie ein fehlerhaftes Filtrationsergebnis liefern, mit anderen Worten, wenn das Filtrat aufgrund einer Beschädigung der Filtermembran unerwünschte Qualitäten enthält.

Der Erfindung liegt die Überlegung zugrunde, daß die Wahrscheinlichkeit einer Beschädigung von Filtermembranen zwar gering, jedoch durchaus vorhanden ist, daß aber bei einer Beschädigung von nur wenigen Filterelementen der Filtrationsvorgang mit befriedigendem Arbeitsergebnis fortgeführt werden kann, indem man beispielsweise einfach durch Schließen eines Ventils in der Filtratleitung oder durch Rückleiten des mangelhaften Filtrats in den Trübenzulauf das betreffende Filterelement aus dem Prozess ganz bzw. teilweise herausnimmt. Bei einer Vielzahl von in der Filtervorrichtung enthaltenen Filterelementen vermindert sich dann lediglich die Gesamtleistung der Filtervorrichtung um nur einen geringen Bruchteil, eine Stillsetzung der gesamten Filtervorrichtung nur wegen Beschädigung eines einzelnen Filterelements ist nicht notwendig.

Darüberhinaus gestattet die Erfindung einen gezielte Lokalisierung, welches Filterelement wegen Schadhaftigkeit ausgetauscht werden muß. Ein vorsorglicher Austausch aller Filterlemente ist nicht erforderlich.

Im einfachsten Falle überwacht man nur die Filtratqualität in der Filtratsammelleitung, und wenn diese zu Beanstandungen Anlaß gibt, prüft man das Filtrat in den einzelnen Filtratleitungen. Dazu kann man sie im einfachsten Falle von der Filtratsammelleitung lössen und das auslaufende Filtrat sensorisch prüfen.

Man kann aber auch in jeder Filtratleitung eine Überwachungseinrichtung anordnen, die es ermöglicht, das darin fließende Filtrat ohne Lösen der Filtratleitung von der Sammelleitung zu prüfen. Als Überwachungseinrichtung ist im einfachsten Falle ein transparentes Rohr- oder Schlauchstück in der Filtratleitung eines jeden Filterelements denkbar. Durch dieses hindurch kann man die Qualität des Filtrats visuell beobachten. Es ist aber auch möglich, die Beobachtung durch ein solches transparentes Rohr- oder Schlauchstück mit Hilfe von automatisch arbeitenden elektrooptischen Detektoren auszuführen.

Andere mögliche Überwachungseinrichtungen sind kapazitiv arbeitende Sonden, die die Tatsache ausnutzen, daß sich die Dielektrizitätskonstante des Filtrats ändert, wenn es unerwünschte Filtratqualitäten enthält, oder elektrische Widerstandsmeßeinrichtungen, die den elektrischen Widerstand des Filtrats erfassen, der ebenfalls vom Feststoffgehalt abhängig ist. Auch Viskosimeter sind einsetzbar.

Als individuelle Überwachungseinrichtungen sind fernerhin Durchflußmesser von Vorteil. Sie können alternativ oder zusätzlich zu anderen individuellen Überwachungseinrichtungen eingesetzt werden. Mit ihnen läßt sich der Filtratdurchsatz kontinuierlich beobachten, sodaß sich auf diese Weise das Langzeitverhalten der einzelnen Filterlemente ermitteln läßt.

Ein weiterer, nicht zu unterschätzender Vorteil der Erfindung liegt darin, daß die Filterelemente ortsfest gehalten sind und daß nur der Rotor ausgewuchtet werden muß, was sich relativ einfach ausführen und aufrechterhalten läßt, da er keine Teile enthält, die sich während des Filtrationsvorgangs verändern. Schließlich ist auch die Handhabung der Filtervorrichtung vereinfacht, weil beim Demontieren geringere Massen zu bewegen sind, als wenn etwa rotierende Filterelemente bewegt werden müssen, die eine größere Masse haben als einfache Rührelemente.

Die Erfindung und weitere Vorteile derselben sollen nachfolgend unter Bezugnahme auf die Zeichnungen näher erläutert werden. Es zeigt:
- Fig. 1: einen Axialschnitt durch eine erste Ausführungsform der Erfindung;
- Fig. 2: einen Axialschnitt durch eine zweite Ausführungsform der Erfindung mit individuellen Überwachungseinrichtungen in den Filtratleitungen;
- Fig. 3: einen Axialschnitt durch den Rotor der Filtervorrichtung von Fig. 2;
- Fig. 4: eine Draufsicht auf den Rotor;
- Fig. 5: eine Draufsicht auf die untere Behälterstirnwand der Filtervorrichtung von Fig. 1 oder 2;
- Fig. 6: als Detail die Befestigung eines Filterlements in der einen Behälterstirnwand,
- Fig. 7: eine Anordnung stehender Filterlemente,
- Fig. 8: eine Draufsicht auf die Anordnung nach Fig. 7, und
- Fig. 9: ein Detail der Filterelementbefestigung.

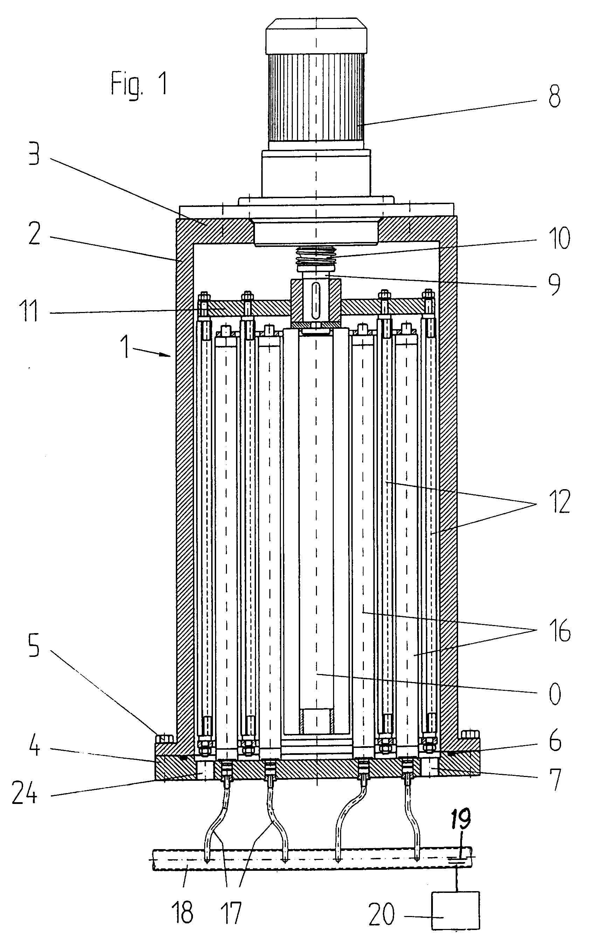

Die Filtervorrichtung nach Fig. 1 besteht aus einem zylindrischen Behälter 1 mit einem zylindrischen Mantel 2, an dem eine erste Behälterstirnwand 3 integral ausgebildet ist, und einer dieser gegenüberstehenden zweiten Behälterstirnwand 4, die mit dem Mantel 2 und der ersten Behälterstirnwand 3 durch Schrauben 5 fest verbunden ist. Ein Dichtungsring 6 schafft eine druckfeste Abdichtung zwischen dem Mantel 2 und der zweiten Behälterstirnwand 4.

Es sei erwähnt, daß die erste Behälterstirnwand auch ein gesondertes Bauelement, vergleichbar der zweiten Behälterstirnwand, sein kann, die von dem Mantel lösbar ist.

In der zweiten Behälterstirnwand 4 sind ein Einlaß 7 zum Zuführen einer zu filternden Trübe und ein Auslaß 24 ausgebildet, mit dessen Hilfe der Innenraum des Behälters 1 durchspült werden kann. An der ersten Behälterstirnwand 3 ist ein Antriebsmotor 8 befestigt, dessen Welle 9 sich durch eine Öffnung in der ersten Behälterstirnwand 3 hindurch in den Behälter erstreckt und an der Öffnung mittels einer Gleitringdichtung 10 abgedichtet ist.

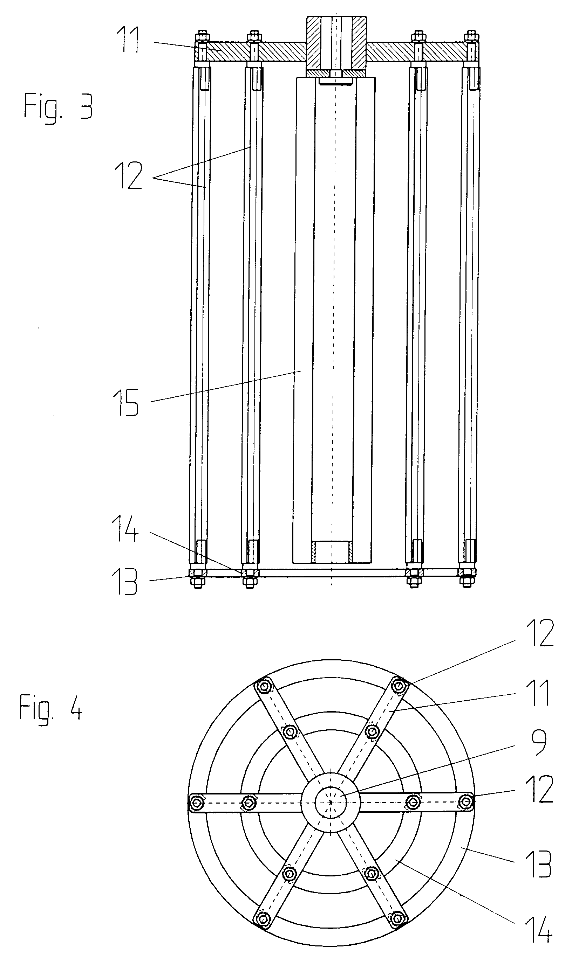

Von der Welle 9 erstreckt sich gemäß Fig. 1 bis 4 radial eine Tragvorrichtung 11, die im vorliegenden Falle aus einem sechsarmigen Stern besteht, an dem insgesamt zwölf Rührelemente mit jeweils ihren einen Enden befestigt sind. Die Rührelemente 12 sind auf zwei zur Achse der Welle 9 konzentrischen Kreisen angeordnet und an ihren anderen Enden mit jeweils einem von zwei Ringen 13 und 14 verbunden. Durch die Ringe werden Fliehkräfte im Betrieb aufgenommen. Achsnah können sich weitere Rührelemente 15 erstrecken. Sämtliche Rührelemente 12 und 15 verlaufen parallel zur Achse O des Behälters 1.

In der zweiten Behälterstirnwand 4 sind auf zwei zueinander konzentrischen Kreisen eine große Anzahl von stabförmigen Filterelementen 16 befestigt. Die Filterlemente 16 sind schlank. Sie können kreisförmigen, elliptischen, linsenförmigen oder flügelförmigen Querschnitt haben und sie erstrecken sich in axialer Richtung parallel zur Behälterachse O, und ihre Filtratkammern sind durch die zweite Behälterstirnwand 4 hindurch über individuelle Filtratleitungen 17 mit einer Filtratsammelleitung 18 verbunden. An ihren anderen Enden sind die auf jeweils einem gemeinsamen Kreis angeordneten Filterlemente 16 an einem Ring 25 bzw. 26 befestigt. Diese Ringe steifen jeweils den Kranz von Filterlementen aus.

Die Filtratleitungen 17 können von der Sammelleitung 18 leicht gelöst werden. In der Sammelleitung ist eine Filtratüberwachungseinrichtung angeordnet, die mit einer Steuereinheit 20 verbunden ist.

Mit dieser Filtervorrichtung wird wie folgt gearbeitet. Zu filternde Trübe wird durch den Einlaß 7 unter Druck in den Behälter geleitet. Der Auslaß 24 ist verschlossen. Der Rotor mit den Rührelementen rotiert, und die Trübe wird an den Filterlementen 16 vorbeibewegt. Dabei gelangt Filtrat durch die Filtermembranen und fließt durch die Filtratleitungen 17 in die Sammelleitung 18 ab. Stellet die Überwachungseinrichtung einen Qualitätsverlust im Filtrat fest, gibt die Steuereinheit 20 ein Signal ab. Das Bedienungspersonal kann nun die Filtratleitungen 17 der Reihe nach von der Sammelleitung 18 lösen und das ausfließende Filtrat prüfen, um auf diese Weise das fehlerhafte Filterelement 16 zu ermitteln. Die betreffende Filtratleitung 17 wird dann abgeklemmt oder mit dem Trübenzulaufbehälter verbunden, um das mangelhafte Filtrat rückzuführen.

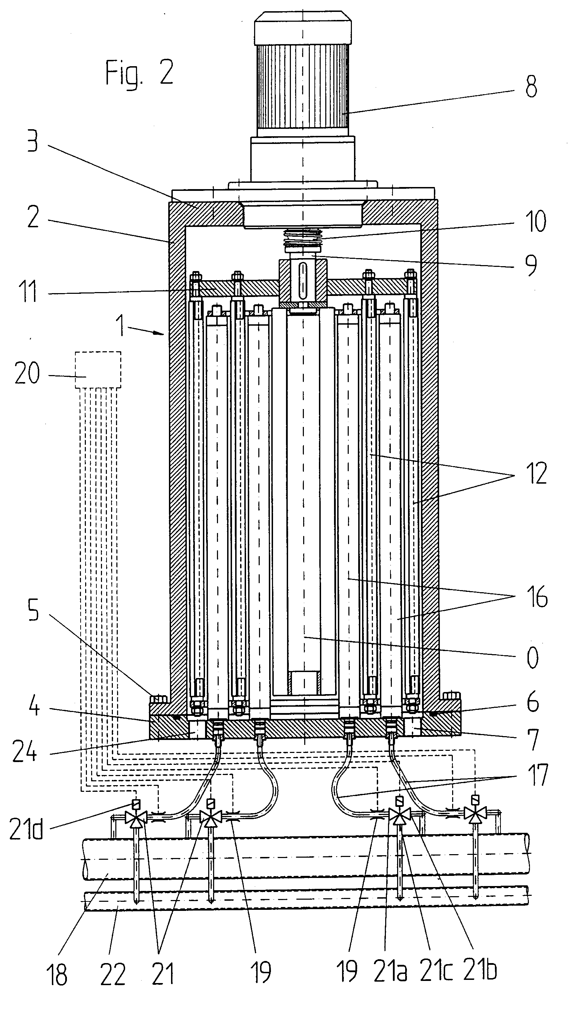

Die Ausführungsform nach Fig. 2 unterscheidet sich von der nach Fig. 1 dadurch, daß in jeder Filtratleitung 17 eine Überwachungseinrichtung 19 angeordnet ist, die mit einer Steuereinheit 20 verbunden ist. Die Überwachungseinrichtungen 19 können kapazitive Sonden, Widerstandsmeßgeräte, Viskosimeter, optische Sensoren, Durchflußmesser oder andere Einrichtungen sein, die in der Lage sind, die durch unerwünschte Filtratqualitäten hervorgerufenen Änderungen der physikalischen Eigenschaften des Filtrats zu erfassen. Das gilt übrigens auch für die Überwachungseinrichtung in der Sammelleitung 18 nach Fig. 1.

Weiterhin ist in jeder Filtratleitung 17 im dargestellten Falle ein Umschaltventil 21 angeordnet, das einen Eingang 21a, einen mit der Filtratsammelleitung 18 verbundenen ersten Ausgang 21b und einen mit einer Rückführleitung 22 verbunden zweiten Ausgang 21c aufweist. Die Umschaltventile 21 sind von Elektromagneten 21d betätigbar, die mit der Steuereinheit 20 verbunden sind.

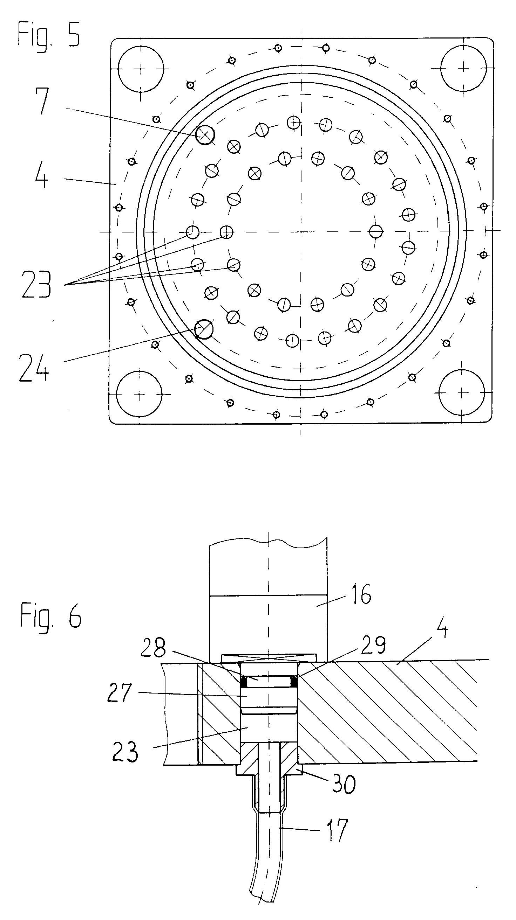

Wie Fig. 5 zeigt, weist die zweite Behälterstirnwand 4 eine Vielzahl von Bohrungen 23 auf, die auf zwei zur Behälterachse O konzentrischen Kreisen angeordnet sind. Jede Bohrung 23 ist zur Aufnahme eines Filterelements 16 bestimmt und dient zugleich als Filtratauslaß. Weiterhin erkennt man zwei größere Bohrungen 7 und 24, die der Befüllung, Entleerung und Durchspülung des Behälters 1 dienen und die in der Praxis an entsprechende Leitungen (nicht dargestellt) angeschlossen sind. Es ist wesentlich, daß die stabförmigen Filterelemente 16 leicht von der zweiten Behälterstirnwand 4 gelöst werden können, um ggf. schadhafte Filterelemente leicht auswechseln zu können. Auf eine besonders vorteilhafte Konstruktion hierfür wird später noch eingegangen werden.

Im Betrieb wird die Filtervorrichtung durch den Einlaß 7 mit einer zu filterenden Trübe unter Druck versorgt. Der Rotor, bestehend aus der Welle 9, der Tragvorrichtung 11 und den Rührelementen 12, wird vom Motor 8 in Drehung versetzt und erzeugt in der Trübe eine Strömung, die quer zu den Filterelementen 16 verläuft, um einen vorzeitigen Aufbau von Filterkuchen auf den Filterlementen zu verhindern. Die Filterelemente 16 sind jeweils mit einer strumpfförmigen Filtermembran bespannt und filtern die Trübe. Das Filtrat läuft durch die Bohrungen 23 in die Filtratleitungen 17 ab und wird an den Überwachungseinrichtungen 19 auf Qualität überwacht. Stellt sich heraus, daß in einer der Filtratleitungen 17 ein Filtrat mangelhafter Qualität strömt, wird dies von der Überwachungseinrichtung 19 wahrgenommen und an die Steuereinheit 20 gemeldet, die einen geeigneten Befehl an den Elektromagneten 21d des zugehörigen Umschaltventils 21 liefert, um dieses so umzuschalten, daß das Filtrat von der zugehörigen Filtratleitung 17 nicht in die Filtratsammelleitung 18, sondern in die Rückführleitung 22 abfließt. Bei der dargestellten Ausführungsform mit gemäß Fig. 5 insgesamt 35 Filterelementen hat somit der Ausfall eines einzigen Filterelements 16 eine Leistungsreduzierung der Filtervorrichtung von lediglich etwa 3% zur Folge.

Zum Austauschen eines Filterelements 16 werden die Schrauben 5 gelöst, und der Mantel 2 mitsamt Motor 8 und Rotor wird von der zweiten Behälterstirnwand abgehoben, sodaß dann die Filterelemente 16 leicht und frei zugänglich sind. Das durch die Überwachungseinrichtung 19 identifizierte schadhafte Filterelement 16 läßt sich dann schnell auswechseln, und durch Montage in der umgekehrten Reihenfolge wird die Filtervorrichtung wieder geschlossen und kann erneut in Betrieb genommen werden.

In der Praxis aber wird man aber eine Leistungsreduktion um wenige Prozent leicht hinnehmen können, und man wird zu einem Ersatz von Filterelementen nur dann greifen, wenn durch Ausfall einer größeren Anzahl von Filterelementen die Gesamtleistung der Filtervorrichtung zu stark abgesunken ist.

Aus Übersichtlichkeitsgründen sind die Einrichtungen zur Beschickung der Filtervorrichtung mit Trübe und das Leitungssystem zum Rückleiten von mangelhaftem Filtrat aus der Rückführleitung 22 in die Filtervorrichtung, ggf. über einen Trübenvorratsbehälter, nicht dargestellt, denn dem Fachmann brauchen hierzu keine weiteren Erläuterungen gegebenen zu werden.

Es soll nun auf einige konstruktive Details eingegangen werden.

Fig. 6 zeigt den Fußbereich eines Filterlements 16. Dieses weist einen Rohrstutzen 27 auf, der von einer Ringnut 28 umgeben ist, in der sich ein O-Ring 29 als Dichtung befindet. Der Rohrstutzen ist klemmend in die Bohrung 23 eingesetzt. Von außen ist in die Bohrung 23 ein Schlauchanschlußstutzen 30 eingepreßt oder eingeschraubt, an dem ein Filtratauslaßschlauch 17 befestigt ist.

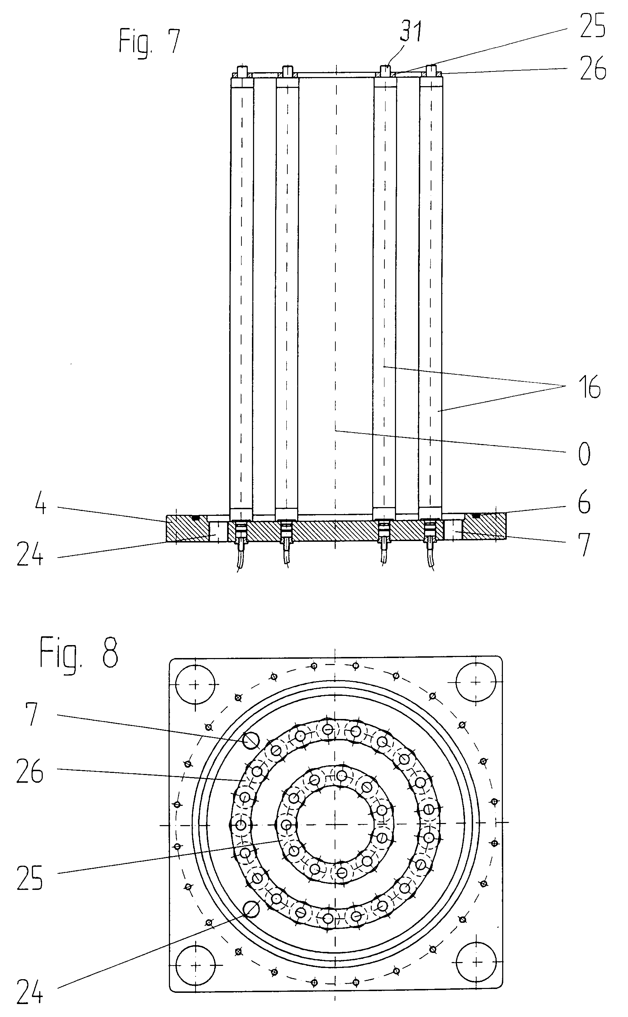

Da im Betrieb erhebliche Strömungskräfte auf die Filterlemente 16 wirken können, reicht es nicht, sie nur in ihrem Fußbereich mittels der Stutzen in den Bohrungen 23 zu halten, und insbesondere dann nicht, wenn sie dort nur eingesteckt sind und lediglich klemmend gehalten werden. Es ist daher vorteilhaft, wenn die anderen Enden der auf einem Kreis angeordneten Filterelemente von einem gemeinsamen Ring gehalten sind, der eine der Anzahl Filterlemente entsprechende Zahl von Bohrungen aufweist, in die an den Filterlementen ausgebildete Zapfen 31 eingesteckt sind. Fig. 7 zeigt eine Seitenansicht und Fig. 8 zeigt eine Draufsicht auf eine solche Anordnung aus zwei konzentrischen Kränzen Filterlementen 16 und zwei Ringen 25 und 26. Fig. 7 läßt auch erkennen, wie leicht die Filterlemente 16 zugänglich sind, wenn der Behältermantel 2 abgenommen ist.

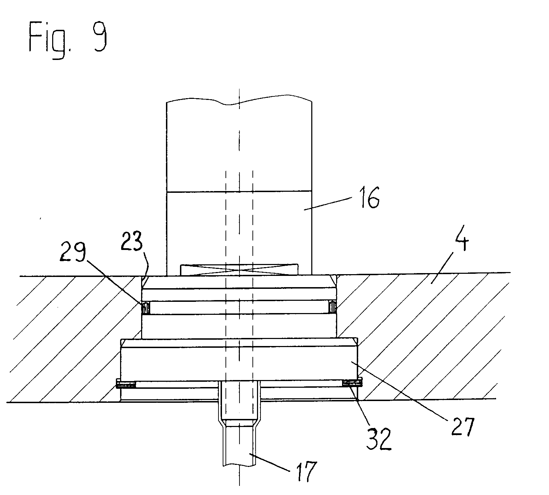

Besonders elegant vollzieht sich der Filterlementwechsel bei der Ausführungsfiorm, die im Detail in Fig. 9 gezeigt ist. Bei dieser hat die Bohrung 23 in der Behälterstirnwand 4, in der das Filterlement mittels Stutzen 27 gehalten, mittels O-Ring 29 abgedichtet und mittel eines Seegerringes 32 gesichert gehalten ist, einen größeren Durchmesser als das Filterlement 16, dessen Durchmesser geringer ist als der des Stutzens 27, der in die Bohrung 23 eingefügt ist. Aufgrund dieser Konstruktion kann nach dem Lösen des Seegerringes 32 das Filterlement 16 durch die Bohrung 23 hindurch nach außen gezogen werden. Wenn die Filterlemente 16 in der oberen Behälterstirnwand gehalten sind, d.h. die Vorrichtung in einer gegenüber Fig. 1 oder 2 gestürzten Lage betrieben ist, braucht dann für den Filterelementwechsel nicht einmal die Trübe aus dem Behälter 1 abgelassen zu werden.

Bei der letztgenannten Konstruktion ist es allerdings erforderlich, daß einige, etwa 3 bis 4 Streben in den Kranz von Filterelementen 16 eingefügt sind, die so lang wie die Filterlemente sind und den Ring 25 bzw. 26 festhalten, an dem die anderen Enden der Filterlemente 16 festgelegt sind. Es ist bei dieser Konstruktion auch günstig, wenn die Zapfen 31, mittels denen die Filterlemente 16 an den Ringen 25 bzw. 26 festgelegt sind, konisch sind, um das Einführen in die ebenfalls konisch ausgeführten Bohrungen in den Ringen 25 bzw. 26 zu erleichtern.

Es ist abschließend zu erwähnen, daß es auch möglich ist, die Welle des Rotors in derselben Stirnwand des Behälters zu lagern, in der die Filterlemente befestigt sind.

## Patentansprüche

1. Filtervorrichtung, bestehend aus einem Behälter (1), Einrichtungen (7) zum Einleiten einer zu filternden Trübe unter Druck in den Behälter (1), einem Rotor (9,11,12), der in dem Behälter (1) angeordnet und von einem Drehantrieb (8) rotierend angetrieben ist, wobei der Rotor aus einer drehbar gelagerten Welle (9), einer daran befestigten, sich radial erstreckenden Tragvorrichtung (11) und einer Vielzahl auf wenigstens einem geschlossenen, zur Achse (O) des Rotors konzentrischen Kreis angeordneten, sich parallel dazu erstreckenden Rührelementen (12) besteht, deren eine Enden an der Tragvorrichtung (11) befestigt sind, und mit einer Vielzahl von in dem Behälter (1) auf wenigstens einem zur genannten Achse (O) konzentrischen Kreis angeordneten, stabförmigen Filterelementen (16), die sich parallel zur genannten Achse (O) und in radialem Abstand von den Rührelementen (12) erstrecken, **dadurch gekennzeichnet,** daß die Filterelemente (16) in einer Stirnwand (4) des Behälters (1) einzeln lösbar befestigt und durch diese Stirnwand (4) hindurch mit individuellen Filtratleitungen (17) verbunden sind, deren Durchfluß einzeln prüfbar ist.

2. Filtervorrichtung nach Anspruch 1, dadurch gekennzeichnet, daß die Filtratleitungen (17) in eine Filtratsammelleitung (18) münden, in der eine Einrichtung (19) zum Überwachen der Filtratqualität angeordnet ist.

3. Filtervorrichtung nach Anspruch 2, dadurch gekennzeichnet, daß die Filtratleitungen (17) sich von der Filtratsammelleitung (18) leicht lösen lassen.

4. Filtervorrichtung nach einem der vorhergehenden Ansprüche, dadurch gekennzeichnet, daß sich in jeder Filtratleitung eine Einrichtung (19) Zum Überwachen der Qualität des Filtrats angeordnet ist.

5. Filtervorrichtung nach einem der vorhergehenden Ansprüche, dadurch gekennzeichnet, daß der Behälter (1) zylindrisch ist und die Achse (0) des Rotors mit der Behälterachse zusammenfällt.

6. Filtervorrichtung nach Anspruch 2 oder einem der davon abhängigen Ansprüche, dadurch gekennzeichnet, daß die Überwachungseinrichtung (19) ein transparentes Rohr- oder Schlauchstück ist.

7. Filtervorrichtung nach Anspruch 2 oder einem der davon abhängigen Ansprüche, dadurch gekennzeichnet, daß die Überwachungseinrichtung (19) eine kapazitiv arbeitende Sonde ist.

8. Filtervorrichtung nach Anspruch 2 oder einem der davon abhängigen Ansprüche, dadurch gekennzeichnet, daß die Überwachungseinrichtung (19) eine elektrische Widerstandmeßeinrichtung ist.

9. Filtervorrichtung nach Anspruch 2 oder einem der davon abhängigen Ansprüche, dadurch gekennzeichnet, daß die Überwachungseinrichtung (19) ein Viskosimeter ist.

10. Filtervorrichtung nach Anspruch 6, dadurch gekennzeichnet, daß die Überwachungseinrichtung (19) eine elektrooptisch arbeitende Einrichtung enthält.

11. Filtervorrichtung nach einem der vorhergehenden Ansprüche, dadurch gekennzeichnet, daß in jeder Filtratleitung (17) ein Absperrventil angeordnet ist.

12. Filtervorrichtung nach einem der vorhergehenden Ansprüche, dadurch gekennzeichnet, daß in jeder Filtratleitung (17) ein Umschaltventil (21) angeordnet ist, mit einem Eingang (21a), der dem Filterelement (16) zugewandt ist, und zwei Ausgängen (21b,21c), die mit einem Filtratsammler (18) bzw. mit einer Trübenrückführleitung (22) verbunden sind.

13. Filtervorrichtung nach einem der vorhergehenden Ansprüche, dadurch gekennzeichnet, daß die auf einem Kreis angeordneten Rührelemente (12,15) an ihren anderen Enden mit einem gemeinsamen Ring (13,14) verbunden sind.

14. Filtervorrichtung nach einem der vorhergehenden Ansprüche, dadurch gekennzeichnet, daß die auf einem gemeinsamen Kreis angeordneten Filterlemente (16) an ihren anderen Enden von einem gemeinsamen Ring (25;26) gehalten sind.

15. Filtervorrichtung nach Anspruch 14, dadurch gekennzeichnet, daß die Filterlemente an ihren anderen Enden jeweils einen konischen Zapfen (31) aufweisen, der in eine konische Bohrung in dem Ring (25;26) eingesteckt ist.

16. Filtervorrichtung nach einem der vorhergehenden Ansprüche, dadurch gekennzeichnet, daß jedes Filterlement (16) an seinem Fuß einen Stutzen (27) aufweist, der in eine Bohrung (23) in der einen Behälterstirnwand (4) eingesteckt ist.

17. Filtervorrichtung nach Anspruch 16, dadurch gekennzeichnet, daß der Stutzen (27) einen größeren Durchmesser aufweist, als das von ihm gehaltene Filterelement (16) und von außerhalb des Behälters (1) in die Bohrung (23) eingesteckt ist.

18. Filtervorrichtung nach einem der Ansprüche 16 und 17, dadurch gekennzeichnet, daß die Stutzen (27) jeweils mittels eines O-Ringes (29) in den Bohrungen (23) abgedichtet sind.

## Claims

1. A filter apparatus comprising a vessel, means for pressure-feeding a pulp to be filtered to said vessel, a rotor disposed in said vessel and rotated by rotary drive means, said rotor consisting of a rotatably mounted shaft, a radially extending carrier structure secured thereto, and a plurality of agitator elements disposed in at least one circular array concentric with the axis of said rotor and extending parallel thereto, with respective ones of their ends secured to said carrier structure, and a plurality of rod-shaped filter elements disposed within said vessel on at least one circular array concentric with said axis, and extending parallel to said axis at positions radially spaced from said agitator elements, said filter elements being individually and releasably mounted on one end wall of said vessel and connected through said end wall to individual filtrate drains adapted to have the flow therethrough independently monitored.

2. A filter apparatus according to claim 1, wherein said filtrate drains open into a filtrate collector manifold having means for monitoring the filtrate quality disposed therein.

3. A filter apparatus according to claim 2, wherein said filtrate drains are readily disconnectable from said filtrate collector manifold.

4. A filter apparatus according to any of the preceding claims, wherein each filtrate drain has disposed therein means for monitoring the quality of the filtrate.

5. A filter apparatus according to claim 1, wherein said vessel is cylindric and said axis of said rotor coincides with the vessel axis.

6. A filter apparatus according to claim 2, 3 or 5, wherein said monitoring means is a transparent pipe or hose section.

7. A filter apparatus according to claim 2, 3 or 5, wherein said monitoring means is a capacitive sensor.

8. A filter apparatus according to claim 2, 3 or 5, wherein said monitoring means is an electric resistance measuring device.

9. A filter apparatus according to claim 2, 3 or 5, wherein said monitoring means is a viscosimeter.

10. A filter apparatus according to claim 6, wherein said monitoring means is an electro-optical device.

11. A filter apparatus according to claim 4, wherein each filtrate drain has a shut-off valve disposed therein.

12. A filter apparatus according to claim 4, wherein each filtrate drain has disposed therein a switch valve having an inlet facing towards said filter element, and two outlets connected to a filtrate collector and a pulp return conduit, respectively.

13. A filter apparatus according to claim 1, 2 or 3, wherein the agitator elements disposed in one circular array have their other ends connected to a common ring.

14. A filter apparatus according to claim 1, 2 or 3, wherein the filter elements disposed on a common circular array have their other ends retained by a common ring.

15. A filter apparatus according to claim 14, wherein each filter element has its other end provided with a conical spigot inserted into a conical bore in said ring.

16. A filter apparatus according to claim 1, 2 or 3, wherein each filter element has its foot portion provided with a socket plugged into a bore in said one vessel end wall.

17. A filter apparatus according to claim 16, wherein said socket is of a greater diameter than the filter element retained thereby, and is plugged into said bore from the outside of said vessel.

18. A filter apparatus according to claim 16 and 17, wherein said sockets are each sealed in said bores by means of an O-ring.

## Revendications

1. Dispositif de filtration comprenant un récipient (1), des dispositifs (7) pour l'introduction sous pression dans le récipient (1) d'un produit à filtrer, un rotor (9, 11, 12) qui est disposé dans le récipient (1) et est entraîné en rotation par un système d'entraînement en rotation (8), le rotor étant composé d'un arbre (9) monté mobile en rotation, d'un dispositif porteur (11) fixé audit arbre et s'étendant radialement, et d'une multitude d'éléments agitateurs (12) qui sont disposés sur au moins un cercle concentrique à l'axe (O) du rotor, qui s'étendent parallèlement audit axe et dont une extrémité est fixée au dispositif porteur (11), et une multitude d'éléments filtrants (16) en forme de barreaux qui sont disposés dans le récipient (1) sur au moins un cercle concentrique audit axe (O) et qui s'étendent parallèlement audit axe (O) à distance radiale des éléments agitateurs (12), caractérisé par le fait que les éléments filtrants (16) sont fixés de façon détachable individuellement à une paroi frontale (4) du récipient (1) et sont reliés, à travers cette paroi frontale (4), à des conduites de filtrat (17) individuelles qui sont contrôlables individuellement quant à la qualité du filtrat qui les parcourt.

2. Dispositif de filtration suivant la revendication 1, caractérisé par le fait que les conduites de filtrat (17) débouchent dans une conduite collectrice de filtrat (18) dans laquelle est disposé un dispositif (19) pour la surveillance de la qualité du filtrat.

3. Dispositif de filtration suivant la revendication 2, caractérisé par le fait que les conduites de filtrat (17) peuvent être facilement détachées de la conduite collectrice de filtrat (18).

4. Dispositif de filtration suivant l'une des revendications précédentes, caractérisé par le fait qu'un dispositif (19) pour la surveillance de la qualité du filtrat est disposé dans chaque conduite de filtrat.

5. Dispositif de filtration suivant l'une des revendications précédentes, caractérisé par le fait que le récipient (1) est cylindrique et que l'axe (O) du rotor coïncide avec l'axe du récipient.

6. Dispositif de filtration suivant la revendication 2 ou l'une des revendications dépendant de cette dernière, caractérisé par le fait que le dispositif de surveillance (19) est un tronçon de tuyau rigide ou souple transparent.

7. Dispositif de filtration suivant la revendication 2 ou l'une des revendications dépendant de cette dernière, caractérisé par le fait que le dispositif de surveillance (19) est une sonde fonctionnant par voie capacitive.

8. Dispositif de filtration suivant la revendication 2 ou l'une des revendications dépendant de cette dernière, caractérisé par le fait que le dispositif de surveillance (19) est un dispositif de mesure de résistance électrique.

9. Dispositif de filtration suivant la revendication 2 ou l'une des revendications dépendant de cette dernière, caractérisé par le fait que le dispositif de surveillance (19) est un viscosimètre.

10. Dispositif de filtration suivant la revendication 6, caractérisé par le fait que le dispositif de surveillance comprend un dispositif fonctionnant par voie électro-optique.

11. Dispositif de filtration suivant l'une des revendications précédentes, caractérisé par le fait qu'une vanne d'arrêt est disposée dans chaque conduite de filtrat (17).

12. Dispositif de filtration suivant l'une des revendications précédentes, caractérisé par le fait que dans chaque conduite de filtrat (17), est disposée une vanne d'inversion (21) comprenant une entrée (21a) qui est tournée vers l'élément filtrant (16) et deux sorties (21b, 21c) qui sont reliées respectivement à un collecteur de filtrat (18) et à une conduite de retour de produit à filtrer (22).

13. Dispositif de filtration suivant l'une des revendications précédentes, caractérisé par le fait que les éléments agitateurs (13, 15) disposés sur un cercle sont reliés à leurs autres extrémités à un anneau commun (13, 14).

14. Dispositif de filtration suivant l'une des revendications précédentes, caractérisé par le fait que les éléments filtrants (16) disposés sur un cercle commun sont maintenus à leurs autres extrémités par un anneau commun (25, 26).

15. Dispositif de filtration suivant la revendication 14, caractérisé par le fait que les éléments filtrants présentent, à leurs autres extrémités, chacun un téton conique (31) qui est emboîté dans un trou conique de l'anneau (25 ; 26).

16. Dispositif de filtration suivant l'une des revendications précédentes, caractérisé par le fait que chaque élément filtrant (16) présente à sa base une tubulure (27) qui est emboîtée dans un trou (23) de l'une (4) des parois frontales du récipient.

17. Dispositif de filtration suivant la revendication 16, caractérisé par le fait que la tubulure (27) présente un diamètre plus grand que l'élément filtrant (16) qu'il supporte, et est emboîtée dans le trou (23) de l'extérieur du récipient (1).

18. Dispositif de filtration suivant l'une des revendications 16 et 17, caractérisé par le fait que l'étanchéité des tubulures (27) dans les trous (23) est assurée respectivement à l'aide d'un joint torique (29).
